# FASCICULE DE BREVET EUROPEEN

(11) **EP 1 304 062 B1**
(45) Date de publication et mention de la délivrance du brevet: **14.01.2009**
(21) Numéro de dépôt: 02356198.8
(22) Date de dépôt: 09.10.2002
(51) Int. Cl.: A47J 37/12

(54) **Appareil de cuisson a cuve comportant un dispositif de vidange et un receptacle de vidange**
Kochgerät mit Behälter und einer Entleerungsvorrichtung sowie einem Auffanggefäss
Cooking apparatus with receptacle having a drain device and a drain-receiving receptacle

(30) Priorité: 17.10.2001 FR 0113398
(43) Date de publication de la demande: 23.04.2003
(73) Titulaire: SEB S.A., 69130 Ecully (FR)
(72) Inventeur: Beugnot, Bernard, 21120 Is sur Tille (FR); Federico, Dominique, 21800 Chevigny Saint Sauveur (FR); Bizard, Jean-Claude, 21121 Fontaine les Dijon (FR)
(74) Mandataire: Kiehl, Hubert

(56) Documents cités:
- DE-U- 9 315 764
- GB-A- 661 921
- US-A- 3 106 887
- US-A- 3 845 702

## Description

La présente invention se rapporte au domaine technique général des appareils de cuisson comportant une cuve prévue pour recevoir un bain de cuisson. La présente invention concerne plus particulièrement les appareils du type précité comprenant un dispositif de vidange du bain de cuisson contenu dans la cuve.

La présente invention concerne essentiellement les appareils pour lesquels le bain de cuisson peut être conservé entre deux utilisations. La présente invention concerne les appareils utilisant un bain de cuisson à base d'huile ou de matière grasse fondue, tels que les friteuses.

Dans les friteuses domestiques, le bain de cuisson est conservé le plus souvent dans la cuve de l'appareil. L'huile ou la matière grasse fondue du bain de cuisson peut être filtrée entre deux utilisations.

Il est connu notamment du document FR 2 773 976 de réaliser une friteuse de type domestique comportant un conduit de vidange ainsi qu'un réceptacle supporté par un tiroir monté dans le boîtier de l'appareil. L'utilisation d'un tel appareil nécessite une grande attention de la part de l'utilisateur du fait de la vidange de l'huile hors du boîtier. De plus, le réceptacle étant ouvert, l'utilisateur peut faire tomber de l'huile à l'extérieur par inadvertance.

Il est connu du document US 2 867 164 une friteuse de type industriel comportant une cuve et un réceptacle de vidange logés dans un bâti. La cuve comporte un conduit de vidange fermé par une vanne. Le réceptacle de vidange est monté de manière amovible sur la face intérieure d'une porte du bâti. La transposition d'une telle réalisation dans un appareil domestique apparaît peu sécurisante. En particulier, du fait que le réceptacle est ouvert et est accroché à la porte, de l'huile peut déborder du réceptacle lors d'une ouverture trop brusque de la porte.

Le document CH 294 626 décrit une friteuse de type industriel comportant dans un boîtier une cuve équipée d'un dispositif de vidange ainsi qu'un réceptacle de vidange ouvert logé sous la cuve. Le dispositif de vidange comporte dans sa partie aval un récipient fermé équipé d'un robinet d'évacuation. Un tel dispositif permet de décanter le bain de cuisson, mais comporte l'inconvénient de présenter un encombrement important ainsi qu'une utilisation peu aisée. Un tel dispositif est de ce fait peu satisfaisant pour un appareil domestique.

Un appareil selon le préambule de la revendication 1 est connu du document US 3 845 702.

On constate qu'aucun des appareils précités ne permet la conservation du bain de cuisson dans des conditions satisfaisantes sans demander à l'utilisateur des manipulations fastidieuses.

L'objet de la présente invention est d'améliorer le stockage du bain de cuisson dans un appareil de cuisson comportant une cuve munie d'un dispositif de vidange.

Un autre objet de la présente invention est d'améliorer la commodité d'utilisation des appareils de cuisson comportant une cuve munie d'un dispositif de vidange.

Un objet additionnel de la présente invention est de proposer un appareil du type précité dont la construction reste simple.

Un objet additionnel de la présente invention est de proposer un appareil du type précité dont la construction soit compacte.

Ces objets sont atteints avec un appareil de cuisson comportant un boîtier et dans ce boîtier une cuve prévue pour recevoir un bain de cuisson, munie d'un dispositif de vidange prévu pour un déversement du contenu de la cuve dans un réceptacle de vidange dont la capacité est supérieure ou égale au volume du bain de cuisson utilisé, du fait que le réceptacle de vidange est fermé et comporte une ouverture de remplissage susceptible d'être obturée par une pièce mobile montée sur ledit réceptacle de vidange. Après utilisation, tout le volume du bain de cuisson peut être vidangé dans le réceptacle de vidange. Cette disposition permet de conserver le bain de cuisson à l'abri de l'air dans le réceptacle de vidange. La dégradation du bain de cuisson est ainsi limitée, ce qui permet de prolonger la durée d'utilisation du bain de cuisson et/ou obtenir des aliments de meilleure qualité.

Avantageusement le réceptacle de vidange présente une capacité inférieure ou égale à 60% de la capacité de la cuve, et de préférence inférieure à la moitié de la capacité de la cuve. Une telle disposition permet d'obtenir un appareil de dimensions compactes. Cette disposition s'applique notamment aux friteuses domestiques. En effet le bon fonctionnement de ces appareils exige de limiter le volume du bain de cuisson. Dans les appareils comportant un élément chauffant disposé sous la cuve, le bain de cuisson remplit rarement plus de la moitié de la cuve. Le volume du bain de cuisson peut dépasser légèrement cette valeur dans les appareils présentant un élément chauffant plongeant.

Avantageusement encore, le réceptacle de vidange présente une capacité supérieure à un sixième de la capacité de la cuve, une telle disposition permettant notamment de réaliser des fritures en bain d'huile et de pouvoir vidanger le bain de cuisson dans le réceptacle de vidange.

Avantageusement, pour faciliter l'utilisation de l'appareil, le réceptacle de vidange est amovible par rapport au boîtier. Selon un exemple de réalisation, le boîtier comporte une ouverture latérale dans laquelle peut être inséré au moins partiellement le réceptacle de vidange. Selon un autre exemple de réalisation, le réceptacle de vidange forme un socle supportant le boîtier.

En alternative, le réceptacle de vidange peut être fixe et comporter un dispositif de vidange, la cuve étant alors avantageusement amovible. Un clapet thermostatique peut alors être avantageusement prévu pour le dispositif de vidange du réceptacle de vidange.

Selon un mode de réalisation, le réceptacle de vidange comporte un bac récupérateur fermé par un couvercle. Cette disposition facilite le retrait d'un pain de matière grasse figée, ainsi que le nettoyage du réceptacle de vidange. D'autres réalisations sont envisageables, par exemple un réceptacle de vidange obtenu par soufflage.

Avantageusement, pour permettre la visualisation du contenu, le réceptacle de vidange comporte une face latérale extérieure réalisée au moins partiellement en matériau transparent ou translucide. La face latérale extérieure peut notamment comporter une fenêtre de visualisation.

Avantageusement, pour faciliter le déversement du contenu, le réceptacle de vidange comporte un bouchon de vidange.

Avantageusement, pour faciliter l'implantation de la pièce mobile, l'ouverture de remplissage est ménagée dans un conduit d'admission débouchant dans le réceptacle de vidange.

Avantageusement alors le conduit d'admission débouche dans une paroi latérale du réceptacle de vidange. Cette disposition permet notamment de réaliser un réceptacle de vidange en deux parties avec une partie souple supérieure prévue pour être retirée d'une partie inférieure plus rigide formant un réservoir, le conduit d'admission débouchant dans le réservoir.

Avantageusement, pour faciliter la vidange du contenu de la cuve, la pièce mobile présente un entonnoir prévu pour recueillir le contenu de la cuve issu du dispositif de vidange.

Avantageusement, pour améliorer la qualité du bain de cuisson pour les utilisations suivantes, le dispositif de vidange comporte un conduit d'évacuation protégé par un filtre.

Avantageusement pour faciliter l'utilisation de l'appareil la pièce mobile est actionnée par un bouton de manoeuvre accessible de l'extérieur de l'appareil.

Avantageusement alors, le bouton de manoeuvre est monté sur le réceptacle de vidange, cette disposition permettant de simplifier la construction.

Avantageusement encore, pour simplifier l'utilisation de l'appareil, le bouton de manoeuvre commande le dispositif de vidange.

Selon un mode de réalisation préféré la pièce mobile comporte une came coopérant avec une pièce mobile d'obturation d'un clapet à ressort appartenant au dispositif de vidange.

L'invention sera mieux comprise à l'étude de l'exemple de réalisation suivant, pris à titre nullement limitatif, illustré dans les figures annexées, dans lesquelles :
- la figure 1 est une vue montrant un appareil de cuisson selon l'invention, dans la position prévue pour la vidange du contenu de la cuve, le boîtier extérieur étant représenté en pointillés,
- la figure 2 est une vue partielle de l'appareil montré à la figure 1, dans une position après la vidange de la cuve, montrant le dispositif de sécurité prévu pour éviter deux vidanges consécutives sans retrait du réceptacle de vidange,
- la figure 3 est une vue partielle en coupe transversale de l'appareil montré à la figure 1, dans une position après la vidange de la cuve,
- la figure 4 est une vue partielle en coupe transversale de l'appareil montré à la figure 1, dans la position prévue pour la vidange du contenu de la cuve,
- la figure 5 est une vue partielle du réceptacle de vidange lors de sa remise en place dans le boîtier,
- la figure 6 est une vue partielle du réceptacle de vidange remis en place dans le boîtier, avant une nouvelle opération de vidange.

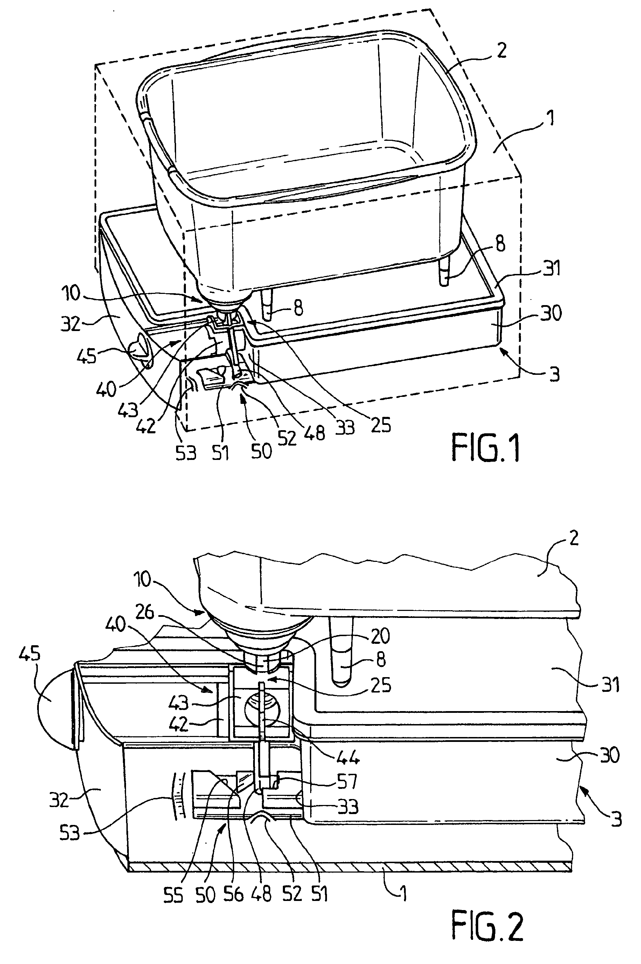

L'appareil illustré aux figures 1 à 6 est une friteuse comportant un boîtier 1 présentant une ouverture supérieure recevant une cuve 2 prévue pour recevoir un liquide de cuisson. L'ouverture supérieure peut être fermée par un couvercle, non représenté aux figures. Le boîtier 1 présente également une ouverture latérale dans laquelle est engagé un réceptacle de vidange 3.

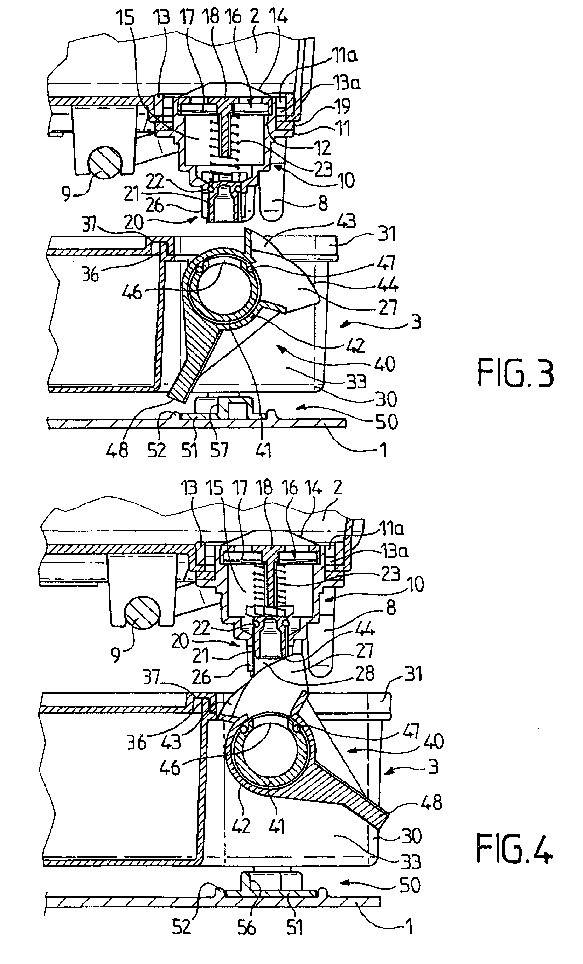

Tel que mieux visible aux figures 3 et 4, la cuve 2 comporte un dispositif de vidange 10. La cuve 2 est avantageusement amovible et comporte des moyens, tels que des pieds 8, prévus pour permettre de poser la cuve sur un plan de travail. Si désiré, des moyens de chauffage électriques 9 peuvent être fixés sous la cuve 2. A titre de variante, les moyens de chauffage électriques peuvent être agencés dans le boîtier 1 ou encore dans la cuve 2.

Le dispositif de vidange 10 comprend un conduit d'évacuation 15 issu du fond de la cuve 2. Le conduit 15 est protégé par un filtre 14. Un clapet à ressort 20 obture la partie inférieure du conduit 15. Un clapet thermostatique 16 est agencé entre le filtre 14 et le clapet à ressort 20.

Le conduit 15 est formé par un corps 11 avantageusement réalisé en une matière plastique résistante aux températures élevées du bain de cuisson, par exemple de l'Amodel résistant jusqu'à 250°C dans le cas d'une friteuse. Le corps 11 est monté amovible par rapport la cuve 2. Un joint 19 est interposé entre la cuve 2 et le corps 11. Le joint 19 est avantageusement solidaire du corps 11 pour éviter une perte lors du démontage du dispositif de vidange ou un oubli lors du remontage dudit dispositif.

Le filtre 14 est monté amovible par rapport à la cuve 2 et au corps 11. Selon l'exemple de réalisation illustré aux figures, le filtre 14 est solidaire d'une couronne 13 assemblée par baïonnette avec le corps 11. La couronne 13 est logée de manière amovible dans un renfoncement du fond de la cuve 2. La couronne 13 est immobilisée en rotation par rapport à la cuve 2. La partie supérieure du corps 11 est engagée dans une ouverture ménagée dans le fond de la cuve 2, et porte des rampes 11a coopérant avec des rampes 13a de la couronne 13 pour former l'assemblage par baïonnette.

Le clapet thermostatique 16 comprend une coupelle bimétallique à retournement 17 fixée sur la face inférieure d'une plaque perforée 18 obturant l'extrémité supérieure du corps 11. La plaque 18 est par exemple sertie à l'intérieur du corps 11.

La coupelle 17 est représentée aux figures 3 et 4 en position ouverte correspondant à la position basse température. La coupelle 17 en position haute température obture le conduit 15 en venant en appui contre un épaulement annulaire interne 12 du corps 11. La température de transition entre la position haute température et la position basse température lors du refroidissement est par exemple de l'ordre de 90°C dans le cas d'une friteuse.

Le clapet à ressort 20 comporte une pièce mobile d'obturation 21 équipée d'un joint périphérique torique 22. La pièce 21 est montée sur un ressort 23 s'appuyant contre la face inférieure de la coupelle 17. La position de repos du ressort 23 correspond à la figure 3 dans laquelle le clapet 20 est fermé.

Le réceptacle de vidange 3 présente une capacité suffisante pour recevoir le bain de cuisson contenu dans la cuve 2. Usuellement le volume maximal de bain de cuisson conseillé pour ledit appareil est défini par un marquage 4 sur une face intérieure de la cuve 2, tel que visible à la figure 1. La capacité du réceptacle de vidange 3 est supérieure à ce volume maximal conseillé. Dans l'exemple de réalisation illustré aux figures la capacité du réceptacle de vidange est de 2,4 litres alors que la capacité totale de la cuve correspond à un volume de 5,5 litres.

Le réceptacle de vidange comprend un bac récupérateur 30 fermé par un couvercle 31. Tel que visible aux figures 3 et 4, le bac récupérateur 30 comporte une nervure supérieure 36 engagée dans une gorge inférieure 37 du couvercle 31.

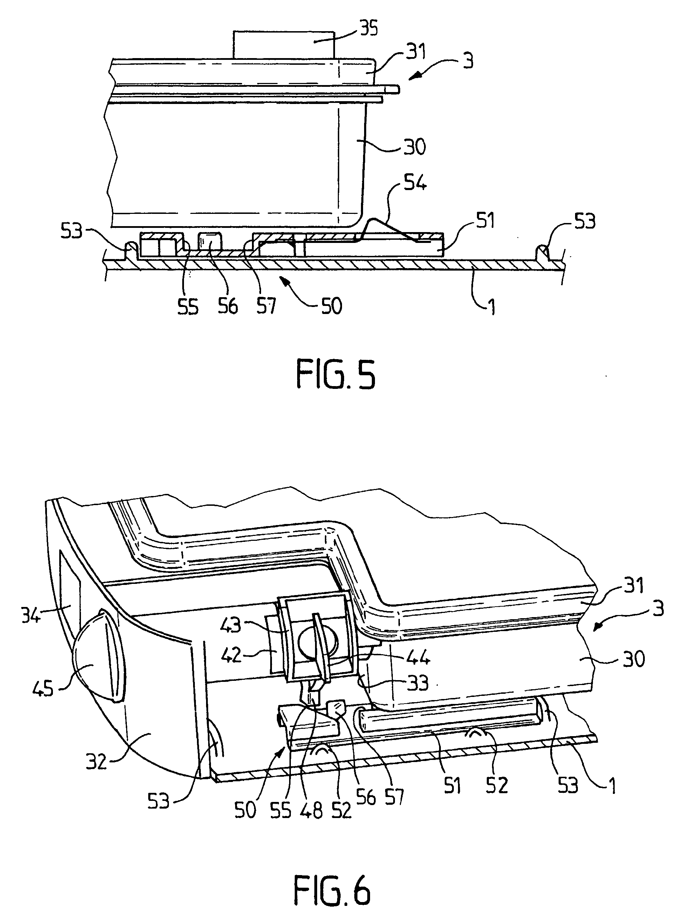

Le réceptacle de vidange 3 présente une face latérale extérieure 32. Si désiré, la face 32 peut être réalisée au moins partiellement en matériau transparent ou translucide pour permettre à l'utilisateur de voir le remplissage du réceptacle de vidange 3. Tel que montré à la figure 6, la face 32 comporte une fenêtre de visualisation 34. Tel que montré à la figure 5, le couvercle comporte une ouverture de déversement fermée par un bouchon de vidange 35.

Le réceptacle de vidange 3 comprend également un mécanisme de commande 40 de la vidange, avantageusement monté sur le bac récupérateur 30. Le mécanisme de commande 40 comprend une pièce mobile de commande 42 montée autour d'un conduit d'admission 41 débouchant dans une paroi latérale 33 du bac 30. La pièce mobile de commande 42 présente un entonnoir 43 et une came 44 prévue pour actionner le clapet à ressort 20. La pièce mobile de commande 42 est reliée à un bouton de manoeuvre 45 monté sur la face latérale extérieure 32 du réceptacle de vidange 3.

Le bouton de manoeuvre 45 entraîne la pièce 42 en rotation. La paroi latérale du conduit 41 présente une ouverture de remplissage 46 entourée par un joint torique 47 de manière à assurer une étanchéité entre le conduit 41 et la pièce mobile de commande 42. Le bouton de manoeuvre 45 est mobile entre une position dite d'utilisation correspondant aux figures 2 et 3 et une position dite de vidange correspondant aux figures 1 et 4. Dans la position de vidange, tel que mieux visible à la figure 4, l'entonnoir 43 est disposé au dessus de l'ouverture de remplissage 46, et la came 44 repousse le clapet 20.

L'appareil comporte un dispositif de sécurité 25 destiné à empêcher le retrait du réceptacle de vidange 3 lorsque le clapet 20 est ouvert. A cet effet l'extrémité inférieure du conduit 15 présente une fente longitudinale 26 et la came 44 agencée en partie dans l'entonnoir 43 vient s'insérer dans la fente 26 lors de la rotation de la pièce mobile de commande 42 vers la position de vidange, tel que montré à la figure 4. Le mécanisme de commande 40 comporte ainsi un pêne 27 prévu pour coopérer avec une gâche 28 appartenant au clapet 20 lorsque le clapet est amené en position ouverte, le pêne 27 étant formé par une face latérale de la came 44, la gâche 28 étant formée par la fente 26.

L'appareil comporte un autre dispositif de sécurité 50 destiné à empêcher deux vidanges consécutives.

A cet effet une pièce mobile de sécurité 51 est agencée entre le boîtier 1 et le réceptacle de vidange 3. La pièce 51 est guidée par des butées de guidage 52. Le mouvement longitudinal de la pièce 51 est limité par des butées d'arrêt 53. Une lame flexible 54 montée sur la pièce 51 est prévue pour venir en butée contre le réceptacle de vidange 3 lors de la mise en place dudit réceptacle dans le boîtier 1, tel que montré à la figure 5, puis pour prendre appui contre le réceptacle de vidange 3 lorsque la pièce 51 est bloquée par l'une des butées 53.

La figure 6 montre le réceptacle de vidange 3 après sa mise en place dans le boîtier 1. La pièce 51 comporte une première came 55 prévue pour coopérer avec une patte 48 issue de la pièce mobile de commande 42 lorsque le bouton de manoeuvre 45 est amené en position de vidange après la mise en place du réceptacle de vidange 3. La pièce 51 comporte une deuxième came 56 prévue pour coopérer avec la patte 48 lorsque le bouton de manoeuvre 45 est ramené en position d'utilisation après une vidange. La pièce 51 comporte une butée de blocage 57 prévue pour bloquer la rotation de la pièce mobile de commande 42 lorsque le bouton de manoeuvre 45 est ramené vers la position de vidange après une nouvelle utilisation sans retrait du réceptacle de vidange 3.

La présente réalisation fonctionne de la manière suivante.

Lorsque l'utilisateur met en place le réceptacle de vidange 3 dans le boîtier 1, la came 44 ne peut atteindre la pièce mobile d'obturation 21 du clapet 20 protégée par l'extrémité inférieure du conduit 15. Le réceptacle de vidange 3 vient en contact avec la lame flexible 54, tel que montré à la figure 5, et repousse la pièce mobile de sécurité 51 dans une position éloignée de l'ouverture latérale du boîtier 1. Lorsque la pièce 51 vient en butée, la lame flexible 54 s'efface et vient frotter contre le réceptacle de vidange 3. La lame flexible 54 permet de maintenir en place la pièce 51 par rapport au réceptacle de vidange 3.

Lorsque le réceptacle de vidange 3 est en place dans le boîtier 1, tel qu'illustré à la figure 6, l'utilisateur peut tourner le bouton de manoeuvre 45 vers la position de vidange représentée aux figures 1 et 4. Lors de la rotation de la pièce de commande 42, la patte 48 repousse la came 55 et déplace la pièce de sécurité 51 dans une position intermédiaire. En fin de course la came 44 repousse la pièce d'obturation 21 du clapet 20, tel que montré à la figure 4. Le liquide contenu dans la cuve 2 peut s'écouler par l'entonnoir 43 et l'ouverture de remplissage 46 du conduit 41 vers le réceptacle 3 si le clapet thermostatique 16 est ouvert. La came 44 bloquée par la fente 26 interdit le retrait du réceptacle de vidange 3.

Pour retirer le réceptacle de vidange 3 du boîtier 1, l'utilisateur ramène le bouton de manoeuvre 45 vers la position d'utilisation, montrée à la figure 3. Lors de la rotation de la pièce de commande 42, la patte 48 repousse la came 56 et déplace la pièce de sécurité 51 dans une position avancée montrée à la figure 2. La came 44 libère le dispositif de vidange 10 et le clapet 20 se referme. La patte 48 libère la pièce de sécurité 51. L'utilisateur peut alors retirer le réceptacle de vidange 3.

Grâce à la pièce de sécurité 51, une nouvelle vidange est interdite si le réceptacle de vidange 3 n'a pas été retiré du boîtier 1 puis remis en place. En effet, lors de la rotation de la pièce de commande 42 la patte 48 est arrêtée par la butée 57 et la came 44 ne peut atteindre le clapet 20. Pour autoriser une nouvelle vidange, il est nécessaire de retirer le réceptacle 3 jusqu'à la libération de la lame flexible 54, tel qu'illustré à la figure 5, afin de repousser la pièce 51 par l'intermédiaire de la lame flexible 54 lors de la remise en place du réceptacle 3. Un retrait moins important du réceptacle 3 ne garantit pas que la remise en place du réceptacle 3 permette de repousser la pièce 51 par l'intermédiaire de la lame flexible 54.

Le dispositif de sécurité 50 interdit de procéder à une deuxième vidange si le réceptacle de vidange 3 n'a pas été retiré au moins partiellement du boîtier 1 puis remis en place, grâce aux déplacements de la pièce 51 lors de la manoeuvre du dispositif de commande 40 de la position d'utilisation vers la position de vidange et retour, ainsi que lors du retrait puis de la remise en place du réceptacle de vidange 3.

La capacité du réceptacle de vidange 3 peut ainsi être limitée au contenu de la cuve 2, sans risquer de débordement dû à deux vidanges consécutives de la cuve 2.

L'utilisateur peut ainsi filtrer le bain de cuisson en le vidangeant dans le réceptacle 3. L'utilisateur peut également conserver le bain de cuisson à l'abri de l'air dans le réceptacle 3, ce qui permet de limiter l'oxydation. L'utilisateur peut ensuite retirer le réceptacle 3 du boîtier 1 pour verser le contenu du réceptacle 3 dans la cuve 2, s'il désire réaliser une nouvelle cuisson, ou dans un réservoir de stockage en vue d'un retraitement, si le bain de cuisson est trop usagé.

L'appareil est ainsi d'une utilisation simple et sûre. De plus l'appareil présente une construction compacte compatible avec un usage domestique.

A titre de variante, d'autres moyens de solidarisation du couvercle 31 sur le bac 30 peuvent être envisagés. Le couvercle peut notamment être monté coulissant ou encore pivotant.

A titre de variante, le bouchon de vidange 35 peut être disposé sur une face latérale voire sur la face inférieure du réceptacle 3. La présence du bouchon de vidange n'est cependant pas nécessaire, l'utilisateur pouvant utiliser l'ouverture de remplissage 46, ou éventuellement retirer le couvercle, pour vidanger le contenu du réceptacle 3.

A titre de variante, le bouton de manoeuvre 45 peut être monté sur une face latérale du réceptacle de vidange logée à l'intérieur du boîtier lorsque ledit réceptacle est en place dans le boîtier. Le bouton de manoeuvre peut alors être accessible par une trappe ménagée dans la paroi latérale du boîtier.

A titre de variante, le bouton de manoeuvre 45 peut être monté sur le boîtier 1 de l'appareil, par exemple à l'opposé de la fenêtre latérale du boîtier permettant l'insertion du réceptacle de vidange. La connexion entre le bouton de manoeuvre et le mécanisme de commande se fait lors de l'insertion du réceptacle de vidange dans le boîtier.

A titre de variante, la lame flexible 54 peut être montée sur une des faces externes du réceptacle de vidange ou encore sur une autre face interne du boîtier.

A titre de variante, le réceptacle de vidange 3 peut former un socle recevant de manière amovible le boîtier entourant la cuve.

La présente invention n'est nullement limitée aux exemples de réalisation décrits et à leurs variantes, mais englobe de nombreuses modifications dans le cadre des revendications.

## Revendications

1. Appareil de cuisson comportant un boîtier (1) et dans ce boîtier (1) une cuve (2) prévue pour recevoir un bain de cuisson, munie d'un dispositif de vidange (10) prévu pour un déversement du contenu de la cuve (2) dans un réceptacle de vidange (3) dont la capacité est supérieure ou égale au volume du bain de cuisson utilisé, **caractérisé en ce que** le réceptacle de vidange (3) est fermé et comporte une ouverture de remplissage (46) susceptible d'être obturée par une pièce mobile (42) montée sur ledit réceptacle de vidange (3).

2. Appareil de cuisson selon la revendication 1, **caractérisé en ce que** le réceptacle de vidange (3) présente une capacité inférieure ou égale à 60% de la capacité de la cuve (2).

3. Appareil de cuisson selon l'une des revendications 1 ou 2, **caractérisé en ce que** le réceptacle de vidange (3) présente une capacité supérieure à un sixième de la capacité de la cuve (2).

4. Appareil de cuisson selon l'une des revendications 1 à 3, **caractérisé en ce que** le réceptacle de vidange (3) est amovible par rapport au boîtier (1).

5. Appareil de cuisson selon la revendication 4, **caractérisé en ce que** le boîtier (1) comporte une ouverture latérale dans laquelle peut être inséré au moins partiellement le réceptacle de vidange (3).

6. Appareil de cuisson selon l'une des revendications 1 à 5, **caractérisé en ce que** le réceptacle de vidange (3) comporte un bac récupérateur (30) fermé par un couvercle (31).

7. Appareil de cuisson selon l'une des revendications 1 à 6, **caractérisé en ce que** le réceptacle de vidange (3) comporte une face latérale extérieure (32) réalisée au moins partiellement en matériau transparent ou translucide.

8. Appareil de cuisson selon la revendication 7, **caractérisé en ce que** la face latérale extérieure (32) comporte une fenêtre de visualisation (34).

9. Appareil de cuisson selon l'une des revendications 1 à 8, **caractérisé en ce que** le réceptacle de vidange (3) comporte un bouchon de vidange (35).

10. Appareil de cuisson selon l'une des revendications 1 à 9, **caractérisé en ce que** l'ouverture de remplissage (46) est ménagée dans un conduit d'admission (41) débouchant dans le réceptacle de vidange (3).

11. Appareil de cuisson selon la revendication 10, **caractérisé en ce que** le conduit d'admission (41) débouche dans une paroi latérale (33) du réceptacle de vidange (3).

12. Appareil de cuisson selon l'une des revendications 1 à 11, **caractérisé en ce que** la pièce mobile (42) présente un entonnoir (43) prévu pour recueillir le contenu de la cuve (2) issu du dispositif de vidange (10).

13. Appareil de cuisson selon l'une des revendications 1 à 12, **caractérisé en ce que** le dispositif de vidange (10) comporte un conduit d'évacuation (15) protégé par un filtre (14).

14. Appareil de cuisson selon l'une des revendications 1 à 13**, caractérisé en ce que** la pièce mobile (42) est actionnée par un bouton de manoeuvre (45) accessible de l'extérieur de l'appareil.

15. Appareil de cuisson selon la revendication 14, **caractérisé en ce que** le bouton de manoeuvre (45) est monté sur le réceptacle de vidange (3).

16. Appareil de cuisson selon l'une des revendications 14 ou 15, **caractérisé en ce que** le bouton de manoeuvre (45) commande le dispositif de vidange (10).

17. Appareil de cuisson selon la revendication 16, **caractérisé en ce que** la pièce mobile (42) comporte une came (44) coopérant avec une pièce mobile d'obturation (21) d'un clapet à ressort (20) appartenant au dispositif de vidange (10).

## Claims

1. A cooking appliance comprising a housing (1), and, inside said housing (1), a vessel (2) designed to receive a cooking bath, and provided with a drain device (10) designed to empty the contents of the vessel (2) into a drain receptacle (3) of capacity greater than or equal to volume of the cooking bath used, said cooking appliance being **characterized in that** the drain receptacle (3) is closed and is provided with a filling opening (46) suitable for being shut off by a moving part (42) mounted on said drain receptacle (3).

2. A cooking appliance according to claim 1, **characterized in that** the drain receptacle (3) presents a capacity less than or equal to 60% of the capacity of the vessel (2).

3. A cooking appliance according to claim 1 or claim 2, **characterized in that** the drain receptacle (3) presents a capacity greater than one sixth of the capacity of the vessel (2).

4. A cooking appliance according to any one of claims 1 to 3, **characterized in that** the drain receptacle (3) is removable relative to the housing (1).

5. A cooking appliance according to claim 4, **characterized in that** the housing (1) is provided with a side opening into which the drain receptacle (3) can be inserted at least in part.

6. A cooking appliance according to any one of claims 1 to 5, **characterized in that** the drain receptacle (3) comprises a collector pan (30) closed by a lid (31).

7. A cooking appliance according to any one of claims 1 to 6, **characterized in that** the drain receptacle (3) has an outer side face (32) that is made, at least in part, of a transparent or translucent material.

8. A cooking appliance according to claim 7, **characterized in that** the outer side face (32) is provided with an inspection window (34).

9. A cooking appliance according to any one of claims 1 to 8, **characterized in that** the drain receptacle (3) is provided with a drain stopper (35).

10. A cooking appliance according to any one of claims 1 to 9, **characterized in that** the filling opening (46) is provided in an inlet duct (41) that opens out into the drain receptacle (3).

11. A cooking appliance according to claim 10, **characterized in that** the inlet duct (41) opens out in a side wall (33) of the drain receptacle (3).

12. A cooking appliance according to any one of claims 1 to 11, **characterized in that** the moving part (42) presents a funnel (43) designed to receive the contents of the vessel (2) coming from the drain device (10).

13. A cooking appliance according to any one of claims 1 to 12, **characterized in that** the drain device (10) comprises a discharge duct (15) protected by a filter (14).

14. A cooking appliance according to any one of claims 1 to 13, **characterized in that** the moving part (42) is actuated by an operating button (45) that is accessible from outside the appliance.

15. A cooking appliance according to claim 14, **characterized in that** the operating button (45) is mounted on the drain receptacle (3).

16. A cooking appliance according to claim 14 or 15, **characterized in that** the operating button (45) controls the drain device (10).

17. A cooking appliance according to claim 16, **characterized in that** the moving part (42) is provided with a cam (44) co-operating with a moving shut-off part (21) of a spring-loaded valve (20) that is part of the drain device (10).

## Patentansprüche

1. Kochgerät mit einem Gehäuse (1) und in diesem Gehäuse (1) einer Wanne (2), die dazu vorgesehen ist, ein Garbad aufzunehmen, und mit einer Entleerungsvorrichtung (10) versehen ist, die für ein Ausgießen des Inhalts der Wanne (2) in ein Entleerungsgefäß (3) vorgesehen ist, dessen Fassungsvermögen größer als oder gleich groß wie das Volumen des verwendeten Garbads ist und das eine Einfüllöffnung (46) aufweist, die durch ein bewegliches Teil (42) verschlossen werden kann, der am Entleerungsgefäß (3) angebracht ist.

2. Kochgerät nach Anspruch 1, **dadurch gekennzeichnet, dass** das Entleerungsgefäß (3) ein Fassungsvermögen aufweist, das kleiner als oder gleich 60 % des Fassungsvermögens der Wanne (2) ist.

3. Kochgerät nach einem der Ansprüche 1 oder 2, **dadurch gekennzeichnet, dass** das Entleerungsgefäß (3) ein Fassungsvermögen aufweist, das größer als ein Sechstel des Fassungsvermögens der Wanne (2) ist.

4. Kochgerät nach einem der Ansprüche 1 bis 3, **dadurch gekennzeichnet, dass** das Entleerungsgefäß (3) bezüglich des Gehäuses (1) abnehmbar ist.

5. Kochgerät nach Anspruch 4, **dadurch gekennzeichnet, dass** das Gehäuse (1) eine seitliche Öffnung aufweist, in welche das Entleerungsgefäß (3) mindestens teilweise eingefügt werden kann.

6. Kochgerät nach einem der Ansprüche 1 bis 5, **dadurch gekennzeichnet, dass** das Entleerungsgefäß (3) einen Auffangbehälter (30) aufweist, der mit einem Deckel (31) verschlossen ist.

7. Kochgerät nach einem der Ansprüche 1 bis 6, **dadurch gekennzeichnet, dass** das Entleerungsgefäß (3) eine äußere Seitenfläche (32) aufweist, die mindestens teilweise aus transparentem oder lichtdurchlässigem Material besteht.

8. Kochgerät nach Anspruch 7, **dadurch gekennzeichnet, dass** die äußere Seitenfläche (32) ein Sichtfenster (34) aufweist.

9. Kochgerät nach einem der Ansprüche 1 bis 8, **dadurch gekennzeichnet, dass** das Entleerungsgefäß (3) einen Entleerungsstopfen (35) aufweist.

10. Kochgerät nach einem der Ansprüche 1 bis 9, **dadurch gekennzeichnet, dass** die Einfüllöffnung (46) in einer Einlassleitung (41) ausgebildet ist, die in das Entleerungsgefäß (3) mündet.

11. Kochgerät nach Anspruch 10, **dadurch gekennzeichnet, dass** die Einlassleitung (41) mündet in eine Seitenwand (33) des Entleerungsgefäßes (3).

12. Kochgerät nach einem der Ansprüche 1 bis 11, **dadurch gekennzeichnet, dass** das bewegliche Teil (42) einen Trichter (43) aufweist, der dazu vorgesehen ist, den aus der Entleerungsvorrichtung (10) stammenden Inhalt der Wanne (2) aufzufangen.

13. Kochgerät nach einem der Ansprüche 1 bis 12, **dadurch gekennzeichnet, dass** die Entleerungsvorrichtung (10) eine Abflussleitung (15) aufweist, die durch einen Filter (14) geschützt ist.

14. Kochgerät nach einem der Ansprüche 1 bis 13, **dadurch gekennzeichnet, dass** das bewegliche Teil (42) über einen Bedienknopf (45) betätigt wird, der von außerhalb des Geräts zugänglich ist.

15. Kochgerät nach Anspruch 14, **dadurch gekennzeichnet, dass** der Bedienknopf (45) am Auffanggefäß (3) angebracht ist.

16. Kochgerät nach einem der Ansprüche 14 oder 15, **dadurch gekennzeichnet, dass** der Bedienknopf (45) die Entleerungsvorrichtung (10) steuert.

17. Kochgerät nach Anspruch 16, **dadurch gekennzeichnet, dass** das bewegliche Teil (42) einen Nocken (44) aufweist, der mit einem beweglichen Verschlussteil (21) eines gefederten Ventilelements (20) zusammenwirkt, das zur Entleerungsvorrichtung (10) gehört.
